# EUROPÄISCHE PATENTSCHRIFT

(11) **EP 0 882 915 B1**
(45) Veröffentlichungstag und Bekanntmachung des Hinweises auf die Patenterteilung: **12.09.2001**
(21) Anmeldenummer: 98106384.5
(22) Anmeldetag: 07.04.1998
(51) Int. Cl.: F16J 15/36

(54) **Gasbeaufschlagte Gleitringdichtungsanordnung**
Mechanical seal arrangement with gas feeding
Garniture mécanique d'étanchéité en gaz

(30) Priorität: 06.06.1997 DE 29709893 U
(43) Veröffentlichungstag der Anmeldung: 09.12.1998
(73) Patentinhaber: Burgmann Dichtungswerke GmbH & Co. KG, 82515 Wolfratshausen (DE)
(72) Erfinder: Lederer, Günther, 82538 Geretsried (DE); Nosowicz, Josef, Dr., 82538 Geretsried (DE); Schulten, Berthold, 82538 Geretsried (DE); Skrzidlo, Joachim, 82515 Wolfratshausen (DE)
(74) Vertreter: Schmidt, Horst, Dr.

(56) Entgegenhaltungen:
- EP-A- 0 395 278
- GB-A- 2 078 313
- US-A- 4 749 200

## Beschreibung

Die Erfindung betrifft eine gasbeaufschlagte Gleitringdichtungsanordnung mit den Aufbaumerkmalen gemäss dem Oberbegriff des Anspruches 1.

Eine Anforderung an derartige Gleitringdichtungen ist eine hohe Formstabilität der Gleitringe, anderenfalls die Einhaltung gewünschter enger Toleranzen für den zu bildenden Dichtspalt schwierig, wenn nicht gar unmöglich ist, zumal die Gleitringe unter den einwirkenden Drücken und Temperaturen Verwerfungen erfahren können, die nicht ohne weiteres oder nur in beschränktem Umfang im Detail vorherbestimmbar sind. Infolge der hohen Anforderungen an die Dimensionsstabilität und gegenseitigen radialen und axialen Ausrichtung der Dichtflächen sollten die Gleitringe möglichst verwindungssteif aus Materialien mit hohem Elastizitätsmodul und hoher Verschleissfestigkeit, wie Karbiden oder Keramiken, gebildet sein. Als die Gleitringe gegenüber dem jeweiligen Umgebungsbauteil abdichtende Sekundärdichtung dient zumeist ein O-Ring oder dgl.. Diese können unter Dekompressionsbedingungen leicht zerstört werden und insbesondere die axiale Beweglichkeit der Gleitringe infolge Reibung stark beeinträchtigen. Es wurde zwar schon zur Vereinfachung der Konstruktion bei einer Gleitringdichtungsanordnung vorgeschlagen (EP-A-395278), den rotierenden Gleitring in einem metallischen Mitnehmergehäuse, z.B. durch Schrumpfen, zu befestigen, an dem ein die Funktion einer Sekundärdichtung übernehmender Metallfaltenbalg angeschweisst werden kann. Gleichzeitig sorgt der Metallfaltenbalg für das Aufbringen einer mechanischen Vorspannkraft auf den rotierenden Gleitring. Diese bekannte Gleitringdichtungsanordnung ist jedoch für einen Betrieb bei flüssigen abzudichtenden Medien ausgelegt, wobei der rotierende Gleitring aus einem der üblichen keramischen oder Kohlenstoffmaterialien bestehen kann. Diese Anordnung lässt sich jedoch nicht ohne weiteres auf gasbeaufschlagte Gleitringddichtungsanordnungen übertragen, und die Montage in einem Mitnehmergehäuse kann aufgrund thermischer Effekte die genaue Ausrichtung des Gleitring sowohl bei der Montage als auch während des Betriebs der Gleitringdichtungsanordnung beeinträchtigen. Ausserdem bedeutet die Montage des rotierenden Gleitrings in einem Mitnehmergehäuse nicht nur eine Erhöhung der Aufbauteile, sondern auch eine Vergrösserung der baulichen Abmessungen der Anordnung.

Aufgabe der Erfindung ist es, eine verschleissminimierte gasgeschmierte Gleitringdichtungsanordnung mit verbessertem Betriebsverhalten, insbesondere auch während der kritischen Betriebsphasen bei Anlauf und Abfahren einer damit ausgestatteten Gerätschaft, bei gleichzeitiger Minimierung der Bauteilanzahl und der baulichen Abmessungen zu schaffen.

Diese Aufgabe wird erfindungsgemäss durch die Merkmale im kennzeichnenden Teil des Anspruches 1 gelöst. Ein Gesichtspunkt der Erfindung ist, dass deren Gleitringpaarung besondere Massnahmen in Gestalt von gasförderwirksamen Ausnehmungen in den zusammenwirkenden Dichtflächen der Gleitringe aufweist, um eine Dichtspaltbildung zu bewirken. Beide Gleitringe bestehen aus Materialien, die aufgrund ihres hohen Elastizitätsmoduls die zur Erzielung einer hohen Dimensionsstabilität des Dichtspaltes erforderliche hohe Steifigkeit bzw. Formbeständigkeit schaffen. Dabei besteht wenigstens der rotierende Gleitring aus einem metallischen Material, was eine unmittelbare Anbindung des Metallfaltenbalges am Gleitring durch Schweissen ermöglicht, so dass das bisher in einem solchen Fall erforderliche Mitnehmergehäuse entfallen kann. Der Metallfaltenbalg übernimmt nicht nur die Befederung des rotierenden Gleitrings, sondern bildet gleichzeitig die zughörige Sekundärabdichtung, so dass kein auf dem rotierenden Bauteil hin- und herbeweglicher 0-Ring aus elastomerem Material vorhanden sein braucht, der die Beweglichkeit des rotierenden Gleitrings beeinträchtigen könnte. Dessen beim Betrieb selbstzentrierende Eigenschaft in Bezug auf den drehfesten Gleitring wird demzufolge weder durch thermische Zwangsverwerfungen, wie sie durch ein Mitnehmergehäuse hervorgerufen werden können, noch durch bewegungshemmende Reibkräfte seitens der bislang bei gasbeaufschlagten Anordnungen vorgesehenen sekundärdichtenden Massnahmen beeinträchtigt. Durch das Weglassen des Mitnehmergehäuses werden nicht nur Fertigungs- und Montagekosten eingespart, sondern dies ermöglicht ausserdem eine Verringerung der baulichen Abmessungen der Dichtungsanordnung dergestalt, dass diese z.B. in einem standardmässigen (vgl. DIN 24960) Einbauraum untergebracht werden kann. Zusammenfassend wird durch die Erfindung eine gasbeaufschlagte, gasgeschmierte Gleitringdichtungsanordnung mit verbessertem Betriebsverhalten geschaffen, die einen sicheren Betrieb auch beim An- und Abfahren einer damit ausgerüsteten Gerätschaft gewährleistet.

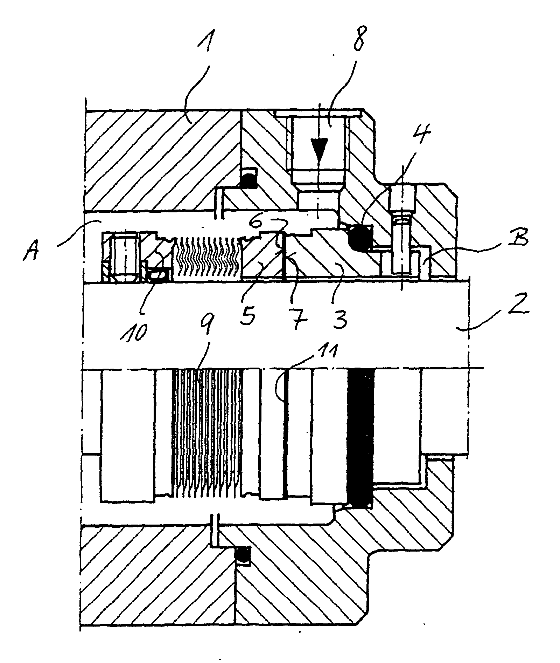

Die Erfindung wird nachfolgend anhand der Zeichnung, die eine Ausführungsform einer erfindungsgemäss aufgebauten Gleitringdichtungsanordnung in geschnittener schematischer Ansicht zeigt, näher beschrieben.

Die Dichtungsanordnung nach der Erfindung umfasst einen an einem Gehäuse 1 drehgesichert, koaxial zu einer Welle 2 gehaltenen drehfesten Gleitring 3. Eine stationäre Sekundärdichtung 4 in Gestalt eines O-Ringes dichtet den Gleitring 3 gegenüber dem Gehäuse 1 ab.

Auf der Welle 2 ist ein Gleitring 5 zur gemeinsamen Drehung mit der Welle 2 montiert.

Die Gleitringe 3, 5 haben im wesentlichen radiale, einander gegenüberliegende Stirn- oder Dichtflächen 6, 7. In wenigstens einer der Dichtflächen 6, 7, vorzugsweise in der Dichtfläche 7 des drehfesten Gleitrings 3, sind förderwirksame Strukturen oder Nuten (nicht gezeigt) mit Pumpwirkung eingebracht sein, um bei Drehung der Welle 2 ein Gas zwischen die Dichtflächen 6, 7 zu pumpen und auf diese Weise dazwischen einen Druck aufzubauen, der eine Trennung der Dichtflächen unter Bildung eines Dichtspaltes bewirkt. Die förderwirksame Strukturen können z.B. eine Ausbildung haben, wie sie in Burgmann-Konstruktionsmappe 14, Eigenverlag 1991, S. 57 beschrieben ist. Andere Ausbildungen förderwirksamer Strukturen sind der DE-A-3940258 zu entnehmen. Auf diese Druckschriften kann daher bezüglich weiterer Details Bezug genommen werden.

In einem Druckraum A aussenumfänglich der Dichtflächen 6, 7 kann ein gasförmiges Sperrfluid über eine im Gehäuse 1 vorgesehene Zuführleitung 8 eingeführt werden. Das Sperrfluid steht unter einem höheren Druck als der eines abzudichtenden Mediums im Druckraum B innenumfänglich der Dichflächen 6, 7.

Beim abzudichtenden Medium kann es sich um eine Flüssigkeit oder ein Gas handeln.

Der rotierende Gleitring 5 ist ferner gegen den drehfesten Gleitring 3 mit einer geeigneten Vorspannkraft vorgespannt, so dass die Dichtflächen 6, 7 der Gleitringe 3, 5 bei Stillstand der Welle 2 in dichtendem Eingriff miteinander gehalten sind. Die Vorspannkraft wird erfindungsgemäss aufgebracht durch einen Metallfaltenbalg 9, der einerends an einem an der Welle 2 montierten Mitnehmerring 10 und anderenends am rotierenden Gleitring 5 unmittelbar hermetisch dicht angeschweisst ist, so dass die Drehbewegung der Welle 2 über den Mitnehmerring 10 und den Metallfaltenbalg 9 auf den Gleitring 5 übertragen wird. Bezüglich weiterer Aufbaumerkmale des Metallfaltenbalges 9 kann z.B. auf Burgmann-Lexikon, ABC der Gleitringdichtung, 1988, Eigenverlag, S. 153 verwiesen werden.

Zum Zwecke des Anschweissens des Metallfaltenbalges 9 umfasst der Gleitring 5 einen massiven, verwindungssteifen Basiskörper aus einem geeigneten metallischen schweissbaren Material, wie Stahl, das eine direkte Schweissverbindung mit dem Metallfaltenbalg 9 ermöglicht. Der Basiskörper hat ferner vorzugsweise einen im wesentlichen rechteckförmigen Querschnitt.

An der dem drehfesten Gleitring 3 zugewandten Stirnfläche des Basiskörpers des Gleitringes 5 ist eine Beschichtung 11 aus einem geeigneten verschleissfesten Material vorgesehen. Obschon andere Materalien verwendet werden können, besteht die Beschichtung 11 vorzugsweise aus einem karbidischen oder oxidischen Hartmaterial, wie Wolframkarbid, Siliziumkarbid, Aluminiumoxid oder Chromoxid. Diese Hartmaterialien können z.B. nach dem Detonations- oder chemischem Aufdampfverfahren (CVD-Verfahren) auf die Stirnfläche des metallischen Basiskörpers mit einer Dicke von z.B. zwischen etwa 0,1 und 0,5 mm aufgebracht werden. Derartige Beschichtungsverfahren sind dem Fachmann bekannt und brauchen daher nicht näher erläutert zu werden. Als weiteres Material für die Beschichtung 11 kommt ein diamantartiges, amorphes, Sihaltiges Kohlenstoffmaterial in Frage, wie es in "Surface Coating Technology", 47 (1991), S. 710-721 beschrieben ist, so dass darauf Bezug genommen werden kann.

Die Beschichtung 11 bedeckt aus fertigungstechnischen Gründen vorzugsweise die gesamte Stirnfläche des Basiskörpers des rotierenden Gleitringes 5. Wenn erwünscht, könnte die Beschichtung 11 auch auf einen Bereich begrenzt werden, an dem eine berührenden Eingriffnahme mit der Dichtfläche des gegenüberliegenden Gleitringes 3 stattfinden kann.

Der drehfeste Gleitring 3 kann ebenso wie der rotierende Gleitring 5 aufgebaut sein, indem er einen Basiskörper aus einem metallischen Material mit einer die Dichtfläche 6 bildenden Beschichtung aus einem verschleissfesten Material aufweist. Die Beschichtung könnte auch aus einem Material mit Notlaufeigenschaft, wie Kohlenstoff bestehen. Der drehfeste Gleitring 3 kann jedoch auch insgesamt aus einem verschleissfesten, tribologisch wirksamen Material gebildet sein.

Vorausgehend wurde die Erfindung anhand einer Anordnung mit Beaufschlagung der Dichtflächen 6, 7 durch ein gasförmiges Sperrfluid beschrieben, bei der das eigentliche abzudichtende Medium flüssig oder gasförmig sein kann. Es versteht sich jedoch, dass die Erfindung auch bei einer Gleitringdichtungsanordnung vorteilhaft angewendet werden kann, bei der das abzudichtende gasförmige Medium selbst die Dichtung beaufschlagt und den Dichtspalt schafft. Die erfindungsgemässe Gleitringdichtungsanordnung kann einzeln, in Tandem- oder in Rücken an Rückenanordnung eingesetzt werden. Sie eignet sich ferner als atmospärenseitige Sicherheitsdichtung.

## Patentansprüche

1. Gleitringdichtungsanordnung mit einem gegenüber einem stationären Bauteil (1) drehgesichert montierbaren Gleitring (3) und einem an einem rotierenden Bauteil (2) zur gemeinsamen Drehung mit diesem montierbaren rotierenden Gleitring (5), welche Gleitringe zusammenwirkende Dichtflächen (6, 7) aufweisen, zwischen denen bei Betrieb ein Dichtspalt geschaffen ist, wobei der rotierende Gleitring (5) durch eine Sekundärdichtung in Gestalt einer einerends mit dem rotierenden Gleitring verbundenen Metallfaltenbalganordnung (9) mit Federeigenschaft abgedichtet und nur durch diese gegen den drehgesicherten Gleitring (3) vorgespannt ist, **dadurch gekennzeichnet, dass** diese als gasbeaufschlagte Gleitringdichtungsanordnung mit in wenigstens einer der Dichtflächen (6,7) vorgesehenen gasförderwirksamen Ausnehmungen ausgebildet ist, um bei Betrieb zwischen die Dichtflächen ein gasförmiges Medium zur Bildung des Dichtspaltes zu fördern, und dass der rotierenden Gleitring (5) einen Basiskörper aus einem metallischen Material umfasst, an dem die Metallfaltenbalganordnung (9) unmittelbar angeschweisst ist

2. Dichtungsanordnung nach Anspruch 1, **dadurch gekennzeichnet, dass** die Metallfaltenbalganordnung (9) anderenends an einem, am rotierenden Bauteil festlegbaren Mitnehmerelement (10) angeschweisst ist.

3. Dichtungsanordnung nach Anspruch 1, **dadurch gekennzeichnet, dass** wenigstens einer der Gleitringe (3,5) dichtflächenseitig wenigstens an einem mit der Dichtfläche (6,7) des anderen Gleitringes zusammenwirkenden Flächenbereich eine Beschichtung (11) aus einem verschleissfesten Material aufweist.

4. Dichtungsanordnung nach Anspruch 2, **dadurch gekennzeichnet, dass** die Beschichtung (11) ein Hartmaterial umfasst.

5. Dichtungsanordnung nach Anspurch 3 oder 4, **dadurch gekennzeichnet, dass** das Hartmaterial Wolframkarbid, Siliziumkarbid, Aluminiumoxid und Chromoxid umfasst und die Beschichtung (11) eine Dicke zwischen 0,1 und 0,5 mm hat.

6. Dichtungsanordnung nach einem der vorhergehenden Ansprüche, **dadurch gekennzeichnet, dass** der rotierende Gleitring (3) und die Metallfaltenbalganordnung (9) aus einem Stahlmaterial gebildet sind.

7. Dichtungsanordnung nach einem der vorhergehenden Ansprüche, **dadurch gekennzeichnet, dass** beide Gleitringe (3,5) gleichartig ausgebildet sind.

8. Dichtungsanordnung nach einem der der vorhergehenden Ansprüche, **dadurch gekennzeichnet, dass** der drehfeste Gleitring (3) aus verschleissfestem Material gebildet ist.

## Claims

1. A face seal assembly including a sealing ring (3) for mounting non-rotationally relative to a stationary component (1) and a rotary sealing ring (5) for mounting on a rotary component (2) for rotation therewith, said sealing rings comprising co-operating seal faces (6, 7) between which a seal gap is formed during operation, whereby said rotary sealing ring (5) is sealed by a secondary seal in the form of a metal bellows means (9) having resilient properties, said metal bellows means (9) being connected at one end to the rotary sealing ring (5), and said rotary sealing ring (5) being biased against the non-rotationally held sealing ring (3) solely by means of said bellows means, **characterised in that** said face seal assembly is a gas-loaded seal having grooves effective for pumping a gas, said grooves being formed in at least one of said seal faces (6, 7) for conveying during operation a gaseous medium between the seal faces for forming the seal gap therebetween, and in that the rotary sealing ring (5) comprises a base member of a metallic material to which the metallic bellows means (9) is directly welded.

2. The seal assembly in accordance with claim 1, **characterised in that** the metallic bellows means (9) is welded at the other end to a driver element (10) adapted for mounting to the rotary component.

3. The seal assembly in accordance with claim 1, **characterised in that** at least one of the sealing rings (3, 5) at the sealing face side thereof comprises a coating (11) of a wear-resistant material on at least a surface portion thereof co-operating with the seal face (6, 7) of the other sealing ring.

4. The seal assembly in accordance with claim 2, **characterised in that** the coating (11) comprises a hard material.

5. The seal assembly in accordance with claim 3 or 4, **characterised in that** the hard material comprises tungsten carbide, silicon carbide, aluminium oxide and chrome oxide, and the coating (11) has a thickness of between 0.1 and 0.5 mm.

6. The seal assembly in accordance with any of the preceding claims, **characterised in that** the rotary sealing ring (5) and the metallic bellows means (9) are formed of a steel material.

7. The seal assembly in accordance with any of the preceding claims, **characterised in that** both sealing rings (3, 5) are of like construction.

8. The seal assembly in accordance with any of the preceding claims, **characterised in that** the non-rotational sealing ring (3) is formed of a wear-resistant material.

## Revendications

1. Dispositif d'étanchéité à anneaux glissants comprenant un anneau glissant (3) pouvant être monté fixé en rotation par rapport à une pièce constitutive fixe (1) et un anneau glissant (5) tournant pouvant être monté sur une pièce constitutive (2) tournante pour tourner avec celle-ci, lesquels anneaux glissants présentent des surfaces d'étanchéité coopérant (6, 7) entre lesquelles une fente d'étanchéité est créée en service, l'anneau coulissant (5) tournant étant étanché par une étanchéité secondaire sous la forme à une extrémité d'un dispositif de soufflet métallique (9) lié à l'anneau glissant tournant ayant une propriété élastique et n'est précontraint que par celle-ci contre l'anneau glissant (3) fixe en rotation, **caractérisé en ce que** celui-ci est conformé en dispositif d'étanchéité à anneaux glissants alimenté en gaz avec dans au moins une des surfaces d'étanchéité (6, 7) des creux efficaces pour ce qui est de convoyer du gaz prévus, pour en service convoyer un milieu gazeux entre les surfaces d'étanchéité visant à la formation de la fente d'étanchéité, et en ce que l'anneau glissant tournant (5) comprend un corps de base en un matériau métallique sur lequel le dispositif de soufflet métallique (9) est directement soudé.

2. Dispositif d'étanchéité selon la revendication 1, **caractérisé en ce que** le dispositif de soufflet métallique (9) est soudé à l'autre extrémité à un élément d'entraînement (10) pouvant être fixé à la pièce constitutive tournante.

3. Dispositif d'étanchéité selon la revendication 1, **caractérisé en ce qu'**au moins un des anneaux glissants (3, 5) du côté de surface d'étanchéité d'au moins à un secteur de surface coopérant avec la surface d'étanchéité (6, 7) de l'autre anneau glissant présente un revêtement (11) en un matériau résistant à l'abrasion.

4. Dispositif d'étanchéité selon la revendication 2, **caractérisé en ce que** le revêtement (11) comprend un matériaux dur.

5. Dispositif d'étanchéité selon la revendication 3 ou 4, **caractérisé en ce que** le matériau dur comprend le carbure de tungstène, le carbure de silicium, l'alumine et l'oxyde de chrome et le revêtement (11) a une épaisseur comprise entre 0,1 et 0,5 mm.

6. Dispositif d'étanchéité selon l'une quelconque des revendications précédentes, **caractérisé en ce que** l'anneau glissant (3) tournant et le dispositif de soufflet métallique (9) sont formés d'un matériau d'acier.

7. Dispositif selon l'une quelconque des revendications précédentes, **caractérisé en ce que** les deux anneaux glissants (3, 5) sont formés de façon similaire.

8. Dispositif d'étanchéité selon l'une quelconque des revendications précédentes, **caractérisé en ce que** l'anneau glissant (3) fixe en rotation est formé en matériau résistant à l'abrasion.
